# EUROPEAN PATENT SPECIFICATION

(11) **EP 0 698 078 B1**
(45) Date of publication and mention of the grant of the patent: **20.08.1997**
(21) Application number: 94915542.8
(22) Date of filing: 22.04.1994
(51) Int. Cl.: C11C 3/10, A23D 9/00, A23C 11/04

(54) **HUMAN MILK FAT REPLACERS FROM INTERESTERIFIED BLENDS OF TRIGLYCERIDES**
MUTTERMILCH-ERSATZSTOFFE AUS UMGEESTERTENTRIGLYCERIDMISCHUNGEN
SUCCEDANES DE MATIERES GRASSES DE LAIT OBTENUS A PARTIR DE MELANGES INTERESTERIFIES DE TRIGLYCERIDES

(30) Priority: 13.05.1993 EP 93303714
(43) Date of publication of application: 28.02.1996
(73) Proprietor: LODERS CROKLAAN B.V., NL-1521 AX Wormerveer (NL)
(72) Inventor: CAIN, Frederick William, NL-2271 VL Voorburg (NL); QUINLAN, Paul Thomas, 9 Ely Way, Bedford MK42 8TW (GB)
(74) Representative: Sikken, Antonius H. J. M.
(86) International application number: EP9401306
(87) International publication number: WO9426855

(56) References cited:
- EP-A- 0 209 327
- EP-A- 0 305 901
- EP-A- 0 496 456
- WO-A-92/19237
- US-A- 5 089 177
- PATENT ABSTRACTS OF JAPAN vol. 16, no. 289 (C-956) 26 June 1992 & JP,A,04 075 591 (AJINOMOTO CO INC) 10 March 1992
- OLEAGINEUX, vol.44, no.1, 1989, FR pages 35 - 43 J. M. MUDERHWA ET AL. 'Interestérification enzymatique régiosélective 1-3 en milieu fondu et en réacteur continu : valorisation de l'huile de palme'
- DATABASE WPI Week 9215, Derwent Publications Ltd., London, GB; AN 92-120578 & JP,A,4 065 493 (AJINOMOTO KK) 2 March 1992

## Description

From our European patent EP 209 327 it is known that triglycerides, wherein more than 50% of the fatty acid residues in the 2-position are saturated, preferably palmitic, while simultaneously more than 43 wt% of the saturated C₁₂ to C₁₈ fatty acids present are bonded to the 2-position, are excellent human milk fat replacers that display a better absorption than triglycerides with a lower content of 2-palmitic. A similar finding is the subject of our European patent application EP 496 456, wherein, however, the advantage of the presence of linolenic acid mainly bonded in the 1,3-positions is disclosed. In both above references also human milk fat compositions are mentioned, comprising blends of the human milk fat replacers and oils, high in lauric (C₁₂) fatty acid residues.

Although the blends according to above references are suitable human milk compositions with a reasonable resemblence to human milk, its deviation from human milk fat was still such that we studied ways to come to triglyceride compositions that are even closer to human milk than the known compositions. In these triglyceride compositions the content of palmitic bonded to the 2-position should remain relatively high, while the content of medium chain fatty acids (i.e. C₈-C₁₄) mainly bonded at the 1,3-positions should exceed a minimum amount, so that the triglyceride composition in total displays a composition, in terms of fatty acid content, distribution of the fatty acids over the three positions of the triglycerides and carbon number distribution that is closer to that of human milk than any synthetic prior art triglyceride composition.

It should be noted here that blends of randomized palm oil, lauric oil, an oil high in oleic acid and an oil, containing linoleic acid are known from EP 376 628 and GB 2 142 340.

Although the total fatty acid composition of these blends resembles human milk fat closely the distribution of the fatty acid residues over the three positions of the triglycerides is quite different from human milk fat. As a consequence thereof the carbon number distribution in the triglyceride composition is also not in line with that of human milk fat.

In order to achieve an improvement in above compositions it was proposed in EP 488 800 to subject the above blends to a co-randomization. Although such a co-randomization might inherently result in a triglyceride composition closer to that of the human milk fat per se, it also results in a composition, wherein palmitic, originally present in the 2-position is spread over the whole molecule, while laurics, originally bonded in the 1,3-positions, will also be bonded in the 2-position in the randomized mixture. Therefore, the digestibility and absorbability of the triglyceride mixture is adversely affected by the randomization treatment.

It is further pointed out that directed triglycerides with improved absorption and digestibility are known from EP 265 699. However, in this reference the directed triglycerides are mainly of the type 1,3-dipolyunsaturated-2-(C₈-C₁₄) saturated. These triglycerides therefore are quite different from human milk fat.

In WO 92/19237 it is disclosed that the hydrolysis rate of fats can be increased by incorporation of medium chain fatty acids in the 1,3-positions of triglycerides. However, nothing is disclosed about the application of this principle in the production of human milk fat replacers.

We have found new fat compositions that have a triglyceride structure that is closer to human milk fat than known hithertho, and that combine the advantages of an improved absorption rate (because of its 2-palmitic content) with an increased hydrolysis rate for the residues in the 1,3-positions (because of presence of medium chain fatty acids in 1,3), resulting in a further improved absorption rate of the triglycerides.

Although triglyceride compositions in general can be described using compound parameters, we found that it is very difficult to come to a description for our compositions that is both generic and sufficient, this being due to the fact that different fatty acid residues with different chain length can be present in our mixtures.
However, our new triglyceride compositions can fully be described as "products by process". So, our invention concerns a triglyceride composition, as obtainable by 1,3-specific, enzymic interesterification of:
1) a triglyceride mixture, comprising at least 30 wt% of palmitic and/or stearic acid residues, from which at least 35 wt%, preferably at least 40 wt% of the total palmitate and/or stearic present are bonded at the 2-position, while the remaining fatty acid residues are mainly unsaturated, in particular oleic and linoleic, and
2) a triglyceride mixture, in which at least 10 wt% of the 1,3-positions are occupied by medium chain fatty acids (C₈-C₁₄), and wherein the weight ratio of the triglycerides 1) and 2) before the interesterification ranges from 80:20 - 20:80.

In a more strict sense our inventions concerns a triglyceride composition, as obtainable by the enzymic conversion of:
1) a triglyceride mixture high in SSU and/or USU-type triglycerides (U= unsaturated fatty acid C₁₈₊; S= saturated fatty acid c₁₆ and/or C₁₈).
   and
2) a triglyceride that can act as a source for saturated medium chain fatty acid moieties in 1,3-specific, enzymic conversions.

Preferred compositions are obtainable from mixtures high in in SSU and/or USU-type triglycerides, comprising more than 40 wt%, preferably more than 60 wt% triglycerides of the SSU and/or USU type, while SSU/USU is preferably PPU/UPU (U= oleic or linoleic; P= palmitic).
Other suitable fats that can be used as such fat compositions are lard or butterfat.
The triglyceride mixture, providing the saturated medium chain fatty acid moieties preferably comprises more than 20 wt%, preferably more than 40 wt% of these medium chain fatty acid moieties. Examples of those fats are palm kernel fat, coconut oil, high lauric rapeseed oil and fractions thereof.

Although the triglycerides according to the invention can be obtained from the conversion of above two triglycerides components, it is preferred that the interesterification is performed on a mixture that also contains other fats, such as sunflower oil and/or high oleic sunflower oil and/or canola oil and/or soybean oil and/or butterfat.

Therefore, in the most preferred embodiment according to the invention the triglyceride compositions are obtained by 1,3-specific, enzymic interesterification of a mixture, comprising:
(-) 30-80 wt% of a triglyceride mixture with an (USU + SSU)-content of 40-70 wt%
(-) 10-50 wt% of a fat, providing the saturated medium chain fatty acid moieties, which fat contains 15-90 wt% saturated medium chain fatty acid residues,
(-) 0-25 wt% of a liquid, vegetable oil high in unsaturated fatty acid residues, such as sunflower oil, high oleic sunflower or soybean oil
(-) 0-35 wt% of butterfat.

The weight ratio of the basic triglycerides that can be applied, ranges from 80:20-20:80.

In the case the fatty acid moiety bonded at the 2-position is palmitic and the medium chain fatty acid residues that are introduced are chosen from C₈ to C₁₂ saturated fatty acids the resulting interesterified triglyceride mixture can be defined as comprising at least 10 wt%, preferably at least 15 wt% palmitic acid residues, wherein the palmitic acid residues are distributed in the triglycerides in such a way that at least 35 wt%, preferably at least 40 wt% of the palmitic residues are bonded at the 2-position, and comprising at least 10 wt% of saturated medium chain fatty acid residues (C₈-C₁₂), such that the sum of the triglycerides with carbon number (42+44+46) is at least 10 wt%, preferably at least 15 wt%.

These triglyceride mixtures display the following fatty acid composition

| | |
|---|---|
| (C_{8:0} + C_{10:0} + C_{12:0}) | 5-40 wt% |
| C_{16:0} | 10-40 wt% |
| C_{18:0} | 2-15 wt% |
| C_{18:1} | 20-50 wt% |
| C_{18:2} | 3-20 wt% |

while the following carbon number distribution occurs in these compositions:

| | |
|---|---|
| C₄₂ | 2-8 wt% |
| C₄₄ | 2.5-10 wt% |
| C₄₆ | 6-15 wt% |
| C₄₈ | 11-18 wt% |
| C₅₀ | 10-20 wt% |
| C₅₂ | 19-40 wt% |
| C₅₄ | 7-20 wt% |

Therefore, our new triglyceride compositions have a carbon number distribution that is closer to that of human milk fat than a physical blend of the components from which the interesterified mixture is made. This is demonstrated in tables I and II, wherein the carbon number distribution is given for human milk fat: for a physical blend of BP/CN/SF/HOSF in a ratio 75/15/7/3; for a physical blend of BP/BF/CN/SB in a ratio 50/25/15/10 and for the products obtained after a 1,3-specific enyzmic interesterification of these blends.
- BP meaning a triglyceride high in 2-palmitate according to EP 209 327
- CN meaning coconut oil
- SF meaning sunflower oil
- HOSF meaning high oleic sunflower oil
- BF meaning butter fat
- SB meaning soybean oil

**TABLE I**

| Carbon no. | human milk | 75/15/7/3 physical mix | BP/CN/SF/HOSF Inter. data |
|---|---|---|---|
| 32 | 0 - 0.2 | 0.95 | |
| 34 | 0 - 0.4 | 1.60 | |
| 36 | 0 - 0.9 | 2.20 | 0.2 |
| 38 | 0 - 2.0 | 2.10 | 0.4 |
| 40 | 0.2 - 3.2 | 1.50 | 1.2 |
| 42 | 0.9 - 5.6 | 1.20 | 3.1 |
| 44 | 2.7 - 9.2 | 0.80 | 4.4 |
| 46 | 5.5 - 13.5 | 0.40 | 9.6 |
| 48 | 11.4- 17.6 | 1.10 | 13.0 |
| 50 | 16.8- 22.8 | 10.5 | 16.8 |
| 52 | 23.9- 38.0 | 58.5 | 34.3 |
| 54 | 7.4 - 16.7 | 17.5 | 15.6 |
| 56 | 0.9 - 3.6 | 0.70 | 0.7 |
| 58 | 0.0 - 1.4 | 0.30 | 0.2 |
| 60 | 0.0 - 0.3 | | |

**TABLE II**

| Carbon no. | human milk | 50/25/15/10 physical mix | BP/BF/CN/SB Inter. data |
|---|---|---|---|
| 32 | 0 - 0.2 | 0.80 | 0.2 |
| 34 | 0 - 0.4 | 1.70 | 0.4 |
| 36 | 0 - 0.9 | 3.20 | 0.8 |
| 38 | 0 - 2.0 | 3.70 | 2.9 |
| 40 | 0.2 - 3.2 | 3.20 | 3.8 |
| 42 | 0.9 - 5.6 | 2.40 | 5.1 |
| 44 | 2.7 - 9.2 | 1.80 | 6.7 |
| 46 | 5.5 - 13.5 | 1.80 | 10.7 |
| 48 | 11.4- 17.6 | 3.40 | 14.3 |
| 50 | 16.8- 22.8 | 10.0 | 15.4 |
| 52 | 23.9- 38.0 | 48.8 | 22.6 |
| 54 | 7.4 - 16.7 | 16.1 | 12.2 |
| 56 | 0.9 - 3.6 | 0.50 | |
| 58 | 0.0 - 1.4 | | |

Blends of triglycerides that comprise at least 20 wt% of the triglyceride compositions according to the invention in addition to at least one other fat are also part of the invention. These blends can be applied in addition to or instead of the triglyceride composition per se.

Although the carbon number distribution in these blends is further away from that of human milk fat than the carbon number distribution of our interesterified blends, the product performance of these blends is still acceptable. In fact, the carbon number distribution in these blends is typically as follows:

| | |
|---|---|
| C₄₂ | 5-10 wt% |
| C₄₄ | 6-15 wt% |
| C₄₆ | 10-16 wt% |
| C₄₈ | 8-15 wt% |
| C₅₀ | 7-15 wt% |
| C₅₂ | 9-22 wt% |
| C₅₄ | 18-30 wt% |

The blends can be applied per se, however, it is also possible to fractionate the blends in order to remove at least part of the trisaturated triglycerides, in particular when these are present in too large amounts.

The other fat can be any fat that suitably can be applied in infant food compositions and are in fact known from the references cited above. However, we prefer to use liquid oils, such as sunflower oil, soybean oil, etc.

Also infant food compositions, comprising 0.5-2 parts by weight of a protein, 3-7 parts by weight of a carbohydrate and 2-3 parts by weight of a fat composition, wherein the fat composition comprises 20-100 wt% of the triglyceride composition according to the invention are part of the invention.

The invention further concerns a process for the production of a human milk fat replacer composition, wherein a triglyceride mixture (I), comprising at least 30 wt% of palmitic and/or stearic acid residues, from which at least 35 wt% are bonded at the 2-position, while the remaining fatty acid residues are mainly unsaturated is converted in the presence of a 1.3-specific enzyme with a triglyceride mixture (II), in which at least 10 wt% of the 1,3-positions are occupied by saturated medium chain fatty acids (C₈-C₁₄), while the weight ratio of mixtures (I) and (II) ranges from 20:80-80:20.

### EXAMPLES

### EXAMPLE I

Fats I and II, described in table III were mixed in a weight ratio of 57:43 parts by weight and interestified using Rhizomucor miehei immobilised on duolite (SP-392, Novo Industries). Reaction conditions were: 1 part catalyst to 20 parts oil; incubated at 70°C for 24h. Fat I was a palm stearine previously reacted with a source of unsaturated fatty acids using the above lipase and containing -53% of total 16:0 in the sn-2 position. Fat II was palm kernel oil, containing ≈ 71% C₈-C₁₄ saturates in sn 1,3 position. After enzymic interesterificatin of fats I and II, the product, fat III comprised ≈ 48% of 16:0 in the sn-2 position. The carbon number distribution of the physical blend (fats I and II) and the enzymically interesterified blend (fat III) are shown in table IV. In the physical blend the sum of carbon numbers 42-46 was 9.2% after enzymic interesterification this increased to 42.2%.

### EXAMPLE II

Lard (6 parts) and palm kernel oil (2.5 parts) were blended together and enzymically interesterified according to the method described in example 1. The carbon number distribution of the physical (Fat IV) and interesterified blends (fat V) are given table V. The interesterified product was mixed with 1.5 parts soyabean oil to produce a fat blend for use in infant formula.
The sum of carbon numbers 42-46 in fat IV and V was 6.95 and 30.1 wt%, respectively. The distribution of 16:0 in the triglyceride mixture before and after interesterification was similar, and close to that found in breast milk.

### EXAMPLE III

Butterfat (3 parts) and palm kernel oil (1 part) were physically blended and 1,3 interesterified according to example I. The carbon number distribution of the physical (fat VI) and interesterified (fat VII) blends are given in table VI.
The sum of carbon numbers 42-46 before and after interesterification was 19.4% and 32.8 wt% respectively.

### EXAMPLE IV

3 parts by weight high oleic sunflower oil (HOSF), 7 parts sunflower, 15 parts coconut and 75 parts Betapol (comprising 30% 16:0 of which 75% was esterified to the sn-2 position) were mixed together and enzymically interesterified as described in Example I. The fatty acid composition of the blend is given in table VII and the carbon number distribution of the blend before (fat IX) and after interesterification (fat X) is given in table VIII. The carbon number distribution after 1,3 interesterification was substantially within the range reported for breast milk (table I), whereas the physical blend lies substantially outside the range. The 1,3 interesterified blend also contained approx 70% of the total 16:0 esterified at the sn-2 position. The sum of carbon numbers 42-46 before and after interesterification was 2.4 and 17.1 respectively.

### EXAMPLE V

15 parts (by weight) coconut oil, 10 parts soyabean oil, 25 parts butter fat and 50 parts Betapol were physically mixed and subjected to 1,3 interesterification as described in Example I. The fatty acid composition of the blend is given in Table IX and the carbon number distribution of the blend before (fat XI) and after interesterification (fat XII) is given in table X.
Comparison with table I illustrates that 1,3 interesterification produces a carbon number distribution sifnificantly closer to that of breast milk. The interesterified blend contained 24% 16:0 of which 65% was esterified to the sn-2 position. The sum of carbon numbers 42-46 before and after 1,3 interesterification was 6.0 and 22.5, respectively.

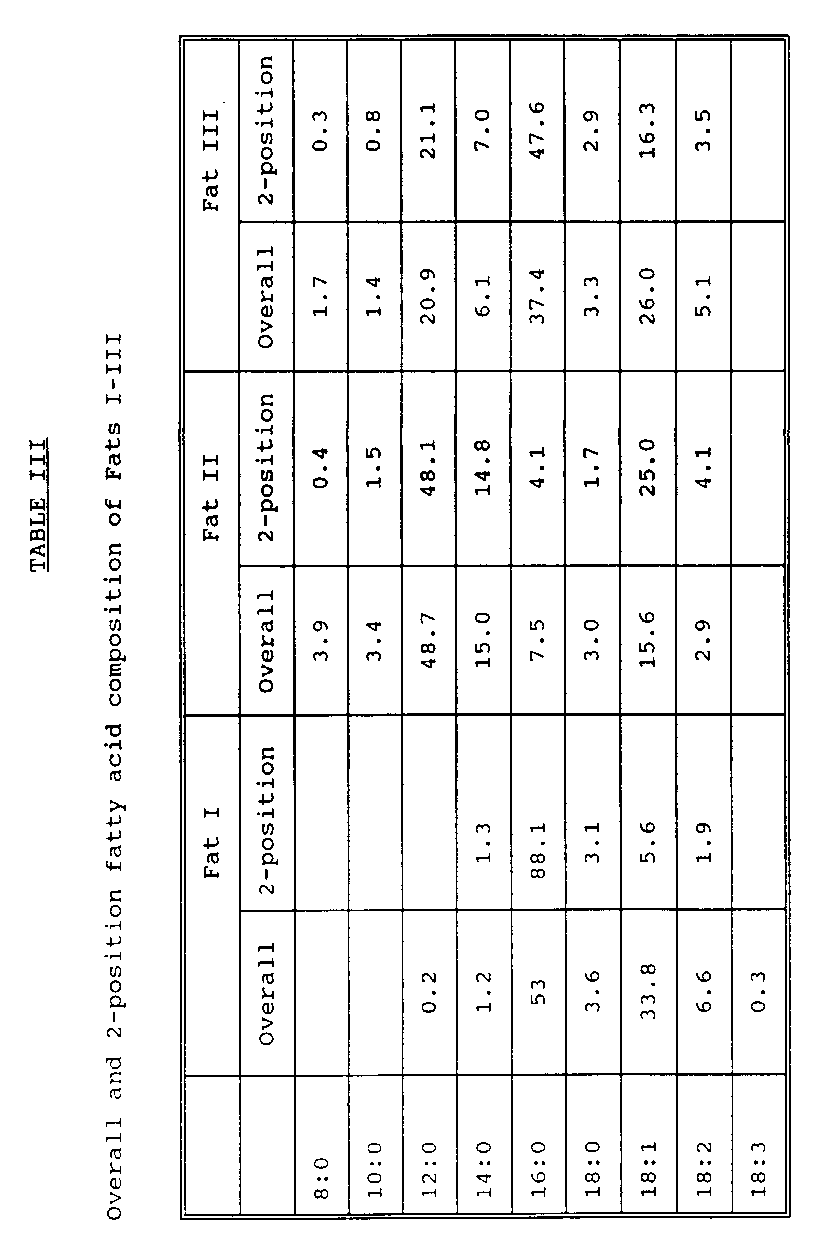

**TABLE IV**

| Carbon Number distribution of fats (I & II) and III | | |
|---|---|---|
| | Fats (I&II) | Fat III |
| 30 | 0.2 | 0.1 |
| 32 | 1.1 | 0.5 |
| 34 | 1.8 | 0.8 |
| 36 | 5.0 | 2.7 |
| 38 | 4.3 | 3.5 |
| 40 | 2.9 | 7.9 |
| 42 | 3.1 | 10.7 |
| 44 | 2.7 | 13.4 |
| 46 | 3.4 | 18.1 |
| 48 | 13.7 | 15.3 |
| 50 | 29.8 | 13.2 |
| 52 | 24.4 | 9.7 |
| 54 | 5.0 | 2.6 |

**TABLE V**

| Lard/PK 6 parts/2.5 parts | | | |
|---|---|---|---|
| Physical blend Fat IV | | After interesterification Fat V | Fat V + 1.5 parts soybean oil |
| 28 | 0.38 | - | - |
| 30 | 0.38 | 0.12 | 0.1 |
| 32 | 1.9 | 0.43 | 0.4 |
| 34 | 2.6 | 0.5 | 0.42 |
| 36 | 6.9 | 1.6 | 1.4 |
| 38 | 5.3 | 2.8 | 2.4 |
| 40 | 3.0 | 3.7 | 3.1 |
| 42 | 2.8 | 7.5 | 6.4 |
| 44 | 2.15 | 8.0 | 6.8 |
| 46 | 2.0 | 14.6 | 12.4 |
| 48 | 3.4 | 17.4 | 14.8 |
| 50 | 10.0 | 12.6 | 11.0 |
| 52 | 42.0 | 19.2 | 20.5 |
| 54 | 15.9 | 10.9 | 19.2 |
| 56 | 1.35 | 0.6 | 0.8 |

**TABLE VI**

| Physical blend Fat VI | | After interesterification FAT VII |
|---|---|---|
| 26 | 0.3 | 1.4 |
| 28 | 1.1 | 1.4 |
| 30 | 1.1 | 2.0 |
| 32 | 3.3 | 3.4 |
| 34 | 6.5 | 4.9 |
| 36 | 13.7 | 6.3 |
| 38 | 14.3 | 7.8 |
| 40 | 10.3 | 8.6 |
| 42 | 7.3 | 9.5 |
| 44 | 6.0 | 10.8 |
| 46 | 6.1 | 12.5 |
| 48 | 7.7 | 12.4 |
| 50 | 8.9 | 9.4 |
| 52 | 8.4 | 6.7 |
| 54 | 4.8 | 2.8 |

**TABLE VII**

| Fatty acid composition of Fat blend (Fats IX & X) | |
|---|---|
| FAME | wt% |
| 8:0 | 1.3 |
| 10:0 | 1.1 |
| 12:0 | 7.6 |
| 14:0 | 3.0 |
| 16:0 | 25.7 |
| 18:0 | 2.2 |
| 18:1 | 38.7 |
| 18:2w6 | 16.2 |
| 18:3w3 | 2.9 |

**TABLE VIII**

| Carbon Number distribution of fats XI and XII | | |
|---|---|---|
| | **wt%** | |
| Carbon Number | Physical blend Fat IX | After 1,3 interesterification Fat X |
| 32 | 0.95 | - |
| 34 | 1.6 | - |
| 36 | 2.2 | 0.2 |
| 38 | 2.1 | 0.4 |
| 40 | 1.5 | 1.2 |
| 42 | 1.2 | 3.1 |
| 44 | 0.8 | 4.4 |
| 46 | 0.4 | 9.6 |
| 48 | 1.1 | 13.0 |
| 50 | 10.5 | 16.8 |
| 52 | 58.5 | 34.3 |
| 54 | 17.5 | 15.6 |
| 56 | 0.7 | 0.7 |
| 58 | 0.3 | 0.2 |

**TABLE IX**

| Fatty Acid composition of Fat blend (Fats XI & XII) | |
|---|---|
| FAME | wt% |
| 6:0 | 0.6 |
| 8:0 | 1.5 |
| 10:0 | 1.6 |
| 12:0 | 8.1 |
| 14:0 | 5.1 |
| 16:0 | 24.1 |
| 18:0 | 5.1 |
| 18:1 | 36.9 |
| 18:2 | 12 |
| 18:3 | 0.9 |

**TABLE X**

| Carbon Number distribution of Fats XI and XII | | |
|---|---|---|
| Carbon Number | wt% | |
| | Physical blend Fat XI | After 1,3 interesterification Fat XII |
| 32 | 0.8 | 0.2 |
| 34 | 1.7 | 0.4 |
| 36 | 3.2 | 0.8 |
| 38 | 3.7 | 2.9 |
| 40 | 3.2 | 3.8 |
| 42 | 2.4 | 5.1 |
| 44 | 1.8 | 6.7 |
| 46 | 1.8 | 10.7 |
| 48 | 3.4 | 14.3 |
| 50 | 10.0 | 15.4 |
| 52 | 48.8 | 22.6 |
| 54 | 16.1 | 12.2 |
| 56 | 0.5 | |

## Claims

1. Triglyceride composition, as obtainable by 1,3-specific, enzymic interesterification of:
1) a triglyceride mixture, comprising at least 30 wt% of palmitic and/or stearic acid residues, from which at least 35 wt%, preferably at least 40 wt% of the total palmitic and/or stearic present are bonded at the 2-position, while the remaining fatty acid residues are mainly unsaturated, in particular oleic and linoleic, and
2) a triglyceride mixture, in which at least 10 wt% of the 1,3-positions are occupied by medium chain fatty acids (C₈-C₁₄),
and wherein the weight ratio of the triglycerides 1) and 2) before the interesterification ranges from 80:20 - 20:80.

2. Triglyceride composition, according to claim 1, wherein the triglyceride mixture mentioned under 1) in claim 1 is:
a triglyceride mixture high in SSU and/or USU-type triglycerides (U = unsaturated fatty acid C₁₈₊;
S = saturated fatty acid C₁₆ and/or C₁₈).

3. Triglyceride composition, according to claim 2, wherein the mixture high in SSU and/or USU-type triglycerides is a mixture, comprising more than 40 wt%, preferably more than 60 wt% triglycerides of the SSU and/or USU type, while SSU/USU is preferably PPU/UPU (U = oleic or linoleic; P = palmitic).

4. Triglyceride composition according to claim 1, wherein the triglyceride mixture, comprising at least 30 wt% of palmitic acid/or stearic residues mentioned under 1) in claim 1 is lard or butterfat.

5. Triglyceride composition, according to claim 1, wherein the triglyceride mixture, mentioned under 2) in claim 1, comprises more that 20 wt%, preferably more than 40 wt% of these medium chain fatty acid moieties.

6. Triglyceride composition, according to claim 1, wherein the interesterification is performed on a mixture that also contains other fats, such as sunflower oil and/or high oleic sunflower oil and/or canola oil and/or soybean oil and/or butterfat.

7. Triglyceride composition, according to claim 6, wherein the composition is obtained by 1,3-specific, enzymic interesterification of a mixture, comprising
(-) 30-80 wt% of a triglyceride mixture with an (USU + SSU)-content of 40-70 wt%
(-) 10-50 wt% of a fat, wherein at least 10 wt% of the 1.3-positions are occupied by saturated medium chain fatty acid moieties, which fat contains 15-90 wt% saturated medium chain fatty acid residues,
(-) 0-25 wt% of a liquid, vegetable oil high in unsaturated fatty acid residues, such as sunflower oil, high oleic sunflower or soybean oil
(-) 0-35 wt% of butterfat.

8. Interesterified triglyceride mixture, comprising at least 10 wt%, preferably at least 15 wt% palmitic acid residues, wherein the palmitic acid residues are distributed in the triglycerides in such a way that at least 35 wt%, preferably at least 40 wt% of the palmitic residues are bonded at the 2-position, and comprising at least 10 wt% of saturated medium chain fatty acid residues (C₈-C₁₂), such that the sum of the triglycerides with carbon number (42+44+46) is at least 10 wt%, preferably at least 15 wt%.

9. Interesterified triglyceride mixture, according to claim 8, wherein the following fatty acid residues are present in the amounts mentioned:
| | |
|---|---|
| (C_{8:0} + C10:0 + C_{12:0}) | 5-40 wt% |
| C_{16:0} | 10-40 wt% |
| C_{18:0} | 2-15 wt% |
| C_{18:1} | 20-50 wt% |
| C_{18:2} | 3-20 wt% |
while more than 35 wt%, preferably more than 40% of the C_{16:0} is bonded at the 2-position.

10. Interesterified triglyceride mixture, according to claims 8 or 9, wherein the following carbon number distribution occurs:
| | |
|---|---|
| C₄₂ | 2 - 8 wt% |
| C₄₄ | 2.5-10 wt% |
| C₄₆ | 6 -15 wt% |
| C₄₈ | 11 -18 wt% |
| C₅₀ | 10 -20 wt% |
| C₅₂ | 19 -40 wt% |
| C₅₄ | 7 -20 wt% |

11. Blend of triglycerides, wherein the blend comprises at least 20 wt% of the triglyceride compositions of claims 1-10 in addition to another fat.

12. Blends of triglycerides according to claim 11, wherein the blend has a carbon number distribution according to:
| | |
|---|---|
| C₄₂ | 5-10 wt% |
| C₄₄ | 6-15 wt% |
| C₄₆ | 10-16 wt% |
| C₄₈ | 8-15 wt% |
| C₅₀ | 7-15 wt% |
| C₅₂ | 9-22 wt% |
| C₅₄ | 18-30 wt% |

13. Infant food composition, comprising 0.5-2 parts by weight of a protein, 3-7 parts by weight of a carbohydrate and 2-3 parts by weight of a fat composition, wherein the fat composition comprises
20-100 wt% of the triglyceride composition as claimed in claims 1-12.

14. Process for the production of a human milk fat replacer composition, with the composition according to claims 1 - 10 wherein a triglyceride mixture (I), comprising at least 30 wt% of palmitic and/or stearic acid residues, from which at least 35 wt% are bonded at the 2-position, while the remaining fatty acid residues are mainly unsaturated is converted in the presence of a 1.3-specific enzyme with at least a triglyceride mixture (II), in which at least 10 wt% of the 1,3-positions are occupied by medium chain fatty acids (C₈-C₁₄), while the weight ratio of mixtures (I) and (II) ranges from 20:80-80:20.

## Patentansprüche

1. Triglyceridzusammensetzung, wie erhältlich durch 1,3-spezifische enzymatische Umesterung
1) eines Triglyceridgemisches, umfassend mindestens 30 Gew.-% Palmitin- und/oder Stearinsäurereste, wovon mindestens 35 Gew.-%, vorzugsweise mindestens 40 Gew.-%, der gesamten vorliegenden Palmitin- und/oder Stearinsäure an der 2-Position gebunden sind, während die verbleibenden Fettsäurereste überwiegend ungesättigt, insbesondere Ölsäure- und Linolsäurereste, sind und
2) eines Triglyceridgemisches, in dem mindestens 10 Gew.-% der 1,3-Positionen von mittelkettigen Fettsäuren (C₈-C₁₄) besetzt sind, und
wobei das Gewichtsverhältnis der Triglyceride 1) und 2) vor der Umesterung im Bereich von 80:20 bis 20:80 liegt.

2. Triglyceridzusammensetzung nach Anspruch 1, wobei das in Anspruch 1 unter 1) genannte Triglyceridgemisch ist: ein Triglyceridgemisch mit hohem Gehalt an SSU- und/oder USU-artigen Triglyceriden (U= ungesättigte Fettsäure C₁₈₊, S= gesättigte Fettsäure C₁₆ und/oder C₁₈).

3. Triglyceridzusammensetzung nach Anspruch 2, wobei das Gemisch mit hohem Gehalt an SSU- und/oder USU-artigen Triglyceriden ein Gemisch ist, das mehr als 40 Gew.-%, vorzugsweise mehr als 60 Gew.-%, Triglyceride des SSU- und USU-Typs umfaßt, wobei SSU/USU vorzugsweise PPU/UPU ist (U= Ölsäure oder Linolsäure, P= Palmitinsäure).

4. Triglyceridzusammensetzung nach Anspruch 1, wobei das in Anspruch 1 unter 1) genannte Triglyceridgemisch, umfassend mindestens 30 Gew.-% Palmitin- und/oder Stearinsäurereste, Schmalz oder Butterfett ist.

5. Triglyceridzusammensetzung nach Anspruch 1, wobei das in Anspruch 1 unter 2) genannte Triglyceridgemisch mehr als 20 Gew.-%, vorzugsweise mehr als 40 Gew.-%, dieser mittelkettigen Fettsäureeinheiten umfaßt.

6. Triglyceridzusammensetzung nach Anspruch 1, wobei die Umesterung an einem Gemisch durchgeführt wird, das außerdem andere Fette, wie Sonnenblumenöl und/oder hochölsäurehaltiges Sonnenblumenöl und/oder Canolaöl und/oder Sojabohnenöl und/oder Butterfett, enthält.

7. Triglyceridzusammensetzung nach Anspruch 6, wobei die Zusammensetzung durch 1,3-spezifische enzymatische Umesterung eines Gemisches erhalten ist, welches umfaßt
(-) 30 bis 80 Gew.-% eines Triglyceridgemisches mit einem (USU + SSU)-Gehalt von 40 bis 70 Gew.-%,
(-) 10 bis 50 Gew.-% eines Fetts, in dem mindestens 10 Gew.-% der 1,3-Positionen von gesättigten mittelkettigen Fettsäureeinheiten besetzt sind, welches Fett 15 bis 90 Gew.-% gesättigte mittelkettige Fettsäurereste enthält,
(-) 0 bis 25 Gew.-% eines flüssigen pflanzlichen Öls mit hohem Gehalt an ungesättigten Fettsäureresten, wie Sonnenblumenöl, hochölsäurehaltigem Sonnenblumenöl oder Sojabohnenöl,
(-) 0 bis 35 Gew.-% Butterfett.

8. Umgeestertes Triglyceridgemisch, umfassend mindestens 10 Gew.-%, vorzugsweise mindestens 15 Gew.-%, Palmitinsäurereste, wobei die Palmitinsäurereste in den Triglyceriden in solcher Weise verteilt sind, daß mindestens 35 Gew.-%, vorzugsweise mindestens 40 Gew.-%, der Palmitinsäurereste an der 2-Position gebunden sind, und umfassend mindestens 10 Gew.-% gesättigter mittelkettiger Fettsäurereste (C₈-C₁₂), so daß die Summe der Triglyceride mit der Kohlenstoffzahl (42+44+46) mindestens 10 Gew.-%, vorzugsweise mindestens 15 Gew.-%, beträgt.

9. Umgeestertes Triglyceridgemisch nach Anspruch 8, wobei die folgenden Fettsäurereste in den genannten Mengen vorliegen:
| | |
|---|---|
| (C_{8:0} + C_{10:0} + C_{12:0}) | 5-40 Gew.-% |
| C_{16:0} | 10-40 Gew.-% |
| C_{18:0} | 2-15 Gew.-% |
| C_{18:1} | 20-50 Gew.-% |
| C_{18:2} | 30-20 Gew.-% |
wobei mehr als 35 Gew.-%, vorzugsweise mehr als 40 Gew.-%, des C_{16:0} an die 2-Position gebunden sind.

10. Umgeestertes Triglyceridgemisch nach Anspruch 8 oder 9, wobei die folgende Kohlenstoffzahlverteilung auftritt:
| | |
|---|---|
| C₄₂ | 2 - 8 Gew.-% |
| C₄₄ | 2,5-10 Gew.-% |
| C₄₆ | 6 -15 Gew.-% |
| C₄₈ | 11-18 Gew.-% |
| C₅₀ | 10-20 Gew.-% |
| C₅₂ | 19-40 Gew.-% |
| C₅₄ | 7-20 Gew.-% |

11. Mischung von Triglyceriden, wobei die Mischung mindestens 20 Gew.-% der Triglyceridzusammensetzungen eines der Ansprüche 1 bis 10 zusätzlich zu einem anderen Fett enthält.

12. Mischungen von Triglyceriden nach Anspruch 11, wobei die Mischung eine Kohlenstoffzahlverteilung gemäß 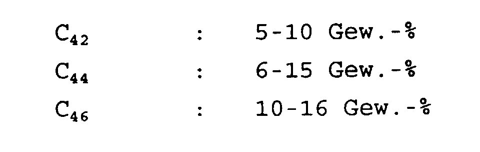 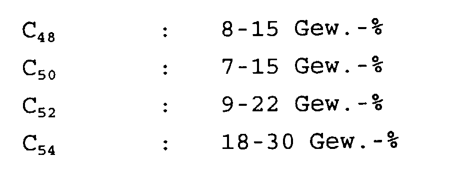 aufweist.

13. Säuglingsnahrungszusammensetzung, umfassend 0,5 bis 2 Gew.-Teile eines Proteins, 3 bis 7 Gew.-Teile eines Kohlenhydrats und 2 bis 3 Gew.-Teile einer Fettzusammensetzung, wobei die Fettzusammensetzung 20 bis 100 Gew.-% der Triglyceridzusammensetzung nach einem der Ansprüche 1 bis 12 umfaßt.

14. Verfahren zur Herstellung einer Muttermilchfettersatzstoffzusammensetzung mit der Zusammensetzung nach einem der Ansprüche 1 bis 10, bei dem ein Triglyceridgemisch (I), umfassend mindestens 30 Gew.-% Palmitin- und/oder Stearinsäurereste, von denen mindestens 35 Gew.-% an die 2-Position gebunden sind, während die verbleibenden Fettsäurereste überwiegend ungesättigt sind, in Gegenwart eines 1,3-spezifischen Enzyms mit mindestens einem Triglyceridgemisch (II) konvertiert wird, in dem mindestens 10 Gew.-% der 1,3-Positionen durch mittelkettige Fettsäuren (C₈-C₁₄) besetzt sind, wobei das Gewichtsverhältnis der Gemische (I) und (II) im Bereich von 20:80 bis 80:20 liegt.

## Revendications

1. Composition triglycéride, telle que l'on peut l'obtenir par une interestérification enzymatique spécifique aux positions 1,3:
1) d'un mélange triglycéride, comprenant au moins 30% en poids de résidus d'acide palmitique et/ou stéarique, parmi lesquels au moins 35%, de préférence au moins 40% en poids au total des groupements palmitiques et/ou stéariques présents sont liés au niveau de la position 2, alors que les résidus d'acides gras restants sont principalement insaturés, en particulier oléiques et linoléiques, et
2) d'un mélange triglycéride, dans lequel au moins 10% en poids des positions 1,3 sont occupés par des acides gras (en C₈ à C₁₄) à chaîne moyenne, dans lequel le rapport pondéral des triglycérides 1) et 2) avant l'interestérification est compris entre 80:20 et 20:80.

2. Composition triglycéride, selon la revendication 1, dans laquelle le mélange triglycéride mentionné sous 1) dans la revendication 1 représente:
un mélange triglycéride à teneur élevée en triglycérides de type SSU et/ou USU (U = acide gras insaturé en C₁₈ ou plus; S = acide gras saturé en C₁₆ et/ou C₁₈).

3. Composition triglycéride, selon la revendication 2, dans laquelle le mélange à teneur élevée en triglycérides de type SSU et/ou USU est un mélange, comprenant plus de 40% en poids, de préférence plus de 60% en poids de triglycérides de type SSU et/ou USU, alors que le type SSU/USU est de préférence PPU/UPU (U = acide oléique ou linoléique; P = acide palmitique).

4. Composition triglycéride selon la revendication 1, dans laquelle le mélange triglycéride, comprenant au moins 30% en poids des résidus d'acide palmitique et/ou stéarique mentionnés sous 1) dans la revendication 1 est le saindoux ou la matière grasse du lait.

5. Composition triglycéride, selon la revendication 1, dans laquelle le mélange triglycéride, mentionné sous 2) dans la revendication 1, comprend plus de 20% en poids, de préférence plus de 40% en poids, de ces fractions d'acide gras à chaîne moyenne.

6. Composition triglycéride, selon la revendication 1, dans laquelle l'interestérification se réalise sur un mélange qui contient également d'autres matières grasses, telles que l'huile de tournesol et/ou l'huile de tournesol à teneur élevée en acide oléique et/ou l'huile de canola et/ou l'huile de graine de soja et/ou la matière grasse du lait.

7. Composition triglycéride, selon la revendication 6, dans laquelle la composition est obtenue par une interestérification enzymatique spécifique aux positions 1,3 d'un mélange, comprenant
(-) 30 à 80% en poids d'un mélange triglycéride avec une teneur (USU + SSU) de 40 à 70% en poids.
(-) 10 à 50% en poids d'une matière grasse, dans laquelle au moins 10% en poids des positions 1,3 sont occupés par des fractions d'acide gras saturé à chaîne moyenne, laquelle matière grasse contient 15 à 90% en poids de résidus d'acides gras saturés à chaîne moyenne,
(-) 0 à 25% en poids d'un liquide, d'une huile végétale à teneur élevée en résidus d'acides gras insaturés, tels que l'huile de tournesol, l'huile de tournesol à teneur élevée en acide oléique ou l'huile de graine de soja
(-) 0 à 35% en poids de matière grasse du lait.

8. Mélange triglycéride interestérifié, comprenant au moins 10% en poids, de préférence au moins 15% en poids de résidus d'acide palmitique, dans lequel les résidus d'acide palmitique sont répartis dans les triglycérides de façon à ce qu'au moins 35% en poids, de préférence au moins 40% en poids des résidus palmitiques soient liés au niveau de la position 2, et comprenant au moins 10% en poids de résidus d'acides gras saturés (en C₈ à C₁₂) à chaîne moyenne, de sorte que la somme des triglycérides ayant un indice de carbone (42+44+46) représente au moins 10% en poids, de préférence au moins 15% en poids.

9. Mélange triglycéride interestérifié, selon la revendication 8, dans lequel les résidus d'acide gras suivants sont présents dans les quantités mentionnées:
| | |
|---|---|
| (C_{8:0} + C_{10:0} + C_{12:0}) | 5 à 40% en poids |
| C_{16:0} | 10 à 40% en poids |
| C_{18:0} | 2 à 15% en poids |
| C_{18:1} | 20 à 50% en poids |
| C_{18:2} | 30 à 20% en poids |
alors que plus de 35% en poids, de préférence plus de 40% en poids de C_{16:0} sont liés au niveau de la position 2.

10. Mélange triglycéride interestérifié, selon les revendications 8 ou 9, dans lequel il se produit la répartition suivante du nombre d'atomes de carbone
| | |
|---|---|
| C₄₂ | 2 à 8 % en poids |
| C₄₄ | 2,5 à 10% en poids |
| C₄₆ | 6 à 15% en poids |
| C₄₈ | 11 à 18% en poids |
| C₅₀ | 10 à 20% en poids |
| C₅₂ | 19 à 40% en poids |
| C₅₄ | 7 à 20% en poids |

11. Mélange de triglycérides, dans lequel le mélange comprend au moins 20% en poids des compositions triglycérides selon les revendications 1 à 10 en plus d'une autre matière grasse.

12. Mélange de triglycérides selon la revendication 11, dans lequel le mélange possède une répartition de l'indice de carbone selon:
| | |
|---|---|
| C₄₂ | 5 à 10% en poids |
| C₄₄ | 6 à 15% en poids |
| C₄₆ | 10 à 16% en poids |
| C₄₈ | 8 à 15% en poids |
| C₅₀ | 7 à 15% en poids |
| C₅₂ | 9 à 22% en poids |
| C₅₄ | 18 à 30% en poids |

13. Composition alimentaire pour enfants, comprenant 0,5 à 2 parties en poids d'une protéine, 3 à 7 parties en poids d'un hydrate de carbone et 2 à 3 parties en poids d'une composition de matière grasse, dans laquelle la composition de matière grasse comprend, 20 à 100% en poids de la composition triglycéride selon les revendications 1 à 12.

14. Procédé pour la production d'une composition de succédané de matière grasse de lait humain, avec la composition selon les revendications 1 à 10 dans laquelle le mélange triglycéride (I), comprenant au moins 30% en poids de résidus d'acide palmitique et/ou stéarique, parmi lesquels au moins 35% en poids sont liés au niveau de la position 2, alors que les résidus restants d'acides gras sont principalement insaturés, est converti en présence d'une enzyme spécifique aux positions 1,3 avec au moins un mélange triglycéride (II), dans lequel au moins 10% en poids des positions 1,3 sont occupés par des acides gras (en C₈ à C₁₄) à chaîne moyenne, alors que le rapport pondéral des mélanges (I) et (II) est compris entre 20:80 et 80:20.
